# EUROPÄISCHE PATENTSCHRIFT

(11) **EP 4 415 852 B1**
(45) Veröffentlichungstag und Bekanntmachung des Hinweises auf die Patenterteilung: **18.02.2026**
(21) Anmeldenummer: 22769941.0
(22) Anmeldetag: 29.08.2022
(51) Int. Cl.: B01D 46/00, B01D 46/10, B01D 46/52

(54) **FILTERELEMENT ZUM FILTERN VON LUFT UND LUFTFILTER**
FILTER ELEMENT FOR FILTERING AIR, AND AIR FILTER
ÉLÉMENT FILTRANT POUR FILTRER DE L'AIR ET FILTRE À AIR

(30) Priorität: 11.10.2021 DE 102021126246
(43) Veröffentlichungstag der Anmeldung: 21.08.2024
(73) Patentinhaber: MANN+HUMMEL GmbH, 71636 Ludwigsburg (DE)
(72) Erfinder: MÜLLER, Thilo, 71277 Rutesheim (DE); MEJSNAR, Peter, 01705 Pova ská Bystrica (SK)
(74) Vertreter: Mann + Hummel Intellectual Property
(86) Internationale Anmeldenummer: PCT/EP2022/073957
(87) Internationale Veröffentlichungsnummer: WO 2023/061652

(56) Entgegenhaltungen:
- EP-A1- 3 744 414
- DE-A1- 102004 031 609
- DE-A1- 102019 120 646

## Beschreibung

### Technisches Gebiet

Die Erfindung betrifft ein Filterelement zum Filtern von Luft, aufweisend einen Filterkörper mit einem gefalteten Filtermedium.

### Stand der Technik

Solche Filterelemente sind aus dem Stand der Technik hinlänglich bekannt.

DE 10 2009 056 511 A1 betrifft ein Filterelement mit einem Faltenpack. An dem Faltenpack ist ein Kunststoffrahmen angespritzt. Eine Kunststoffschaumdichtung ist an dem Kunststoffrahmen angeschäumt.

US 5,795,361 A offenbart ein Luftfilterelement, bei dem ein gefaltetes Filtermedium innerhalb eines Kunststoffrahmens angeordnet ist. Das Filtermedium wird an dem Kunststoffrahmen durch ein Dichtungsmaterial gehalten, das zur Dichtung gegenüber einem Filtergehäuse verwendet wird, in dem sich das Luftfilterelement befindet.

DE 10 2019 120646 A1 offenbart ein Filterelement, umfassend einen Faltenpack aus zickzackförmig gefaltetem Filtermaterial sowie ein an dem Faltenpack angebrachtes und das Faltenpack zumindest teilweise umlaufendes und seitlich abstehendes Rahmenelement. An dem Rahmenelement ist eine Rahmeneinrichtung befestigt, wobei die Rahmeneinrichtung als ein an das seitlich abstehende Rahmenelement angespritztes Kunststoffspritzgussteil ausgeführt ist.

EP 3 744 414 A1 offenbart einen Filter zur Filtration eines Fluidstroms, aufweisend einen Rahmen und ein im Rahmen aufgenommenes Filterelement, wobei das Filterelement ein einen Faltenbalg bildendes mit Falten versehenes Filtermedium aufweist, und der Faltenbalg mit mindestens einem Kantenband versehen ist. Es wird ein Filter offenbart, welcher geringen Materialaufwand, gute Fertigungseigenschaften und eine hohe Dichtheit miteinander verbindet. Es wird offenbart, dass ein solcher Filter durch eine spezielle Ausgestaltung des Kantenbandes erzielbar ist. Das Kantenband ist aus komprimierbarem Material und besitzt eine Höhe, die grösser als die Höhe des Faltenbalgs ist und ist, in dem Bereich, in dem es über die Höhe des Faltenbalgs hinausgeht, an einer Faltkante des Kantenbandes umgefaltet und damit teilweise zweilagig.

Insbesondere bei großen Luftfilterelementen ist aufgrund des Eigengewichts und dem Gewicht des eingelagerten Staubs eine hinreichend steife und stabile Halterung an einem Filtergehäuse erforderlich. Zugleich ist eine zuverlässige Abdichtung zwischen dem Filterelement und dem Filtergehäuse bzw. dessen Gehäuseteilen erforderlich.

Es ist eine Aufgabe der Erfindung, ein kostengünstig herstellbares und sicher an einem Filtergehäuse fixierbares Filterelement anzugeben.

### Offenbarung der Erfindung

Diese Aufgabe wird durch ein Filterelement mit den in Anspruch 1 angegebenen Merkmalen sowie einen Luftfilter gemäß Anspruch 14 und eine Filteranlage gemäß Anspruch 15 gelöst. Bevorzugte Ausführungsformen sind in den Unteransprüchen und der Beschreibung angegeben. Das erfindungsgemäße Filterelement weist die folgenden Merkmale auf:
a) einen Filterkörper, aufweisend ein gefaltetes Filtermedium;
b) ein erstes Seitenband aus einem faserhaltigen Material,
   mit einem Dichtabschnitt, der den Filterkörper an einer sich quer zu Falzkanten des Filtermediums erstreckenden Stirnseite abdichtet,
   und mit einer von dem Dichtabschnitt abstehenden ersten Lasche, die sich vorzugsweise in Richtung der Falzkanten erstreckt;
c) eine umlaufende Dichtung, welche die erste Lasche umgreift.

Faserhaltiges Material für das erste Seitenband zeichnet sich vorteilhaft durch eine vergleichsweise hohe Biegesteifigkeit und geringe Produktionskosten aus. Das Fasermaterial weist bevorzugt Zellulose oder Kunststoffe, zum Beispiel Kunstofffasern, insbesondere aus Polyester wie PET oder CoPET, auf. Durch Zellulose, insbesondere Zellulosefasern, lässt sich eine hohe Biegesteifigkeit und Zugfestigkeit des Seitenbandes bei gleichzeitiger biologischer Abbaubarkeit und somit hoher Umweltverträglichkeit erreichen. Kunststofffasern bieten ebenfalls hohe Zugfestigkeit und Steifigkeit, und können ökologisch vorteilhaft zumindest anteilig aus Kunststoffrecyclat bestehen. Bei einigen Ausgestaltungen des Filterelements kann das faserhaltige Material beschichtet sein. Alternativ oder zusätzlich zu dem faserhaltigen Material kann das erste Seitenband Kunststofffolien, vorzugsweise verschiedener Dicken, Schaummaterial und/oder Karton aufweisen.

Insbesondere ist eine Richtung einer Falzkante definiert als die Richtung einer Geraden, die entlang dieser Falzkante verläuft. Die Falzkanten sind vorzugsweise parallel zueinander orientiert. Die erste Lasche ist grundsätzlich von dem Filterkörper weg gerichtet. Vorzugsweise ist die erste Lasche an der dem Filterbalg gegenüberliegenden Seite des Seitenbandes an dem Seitenband befestigt. Bevorzugt stimmt die Ausrichtung der Falzkanten mit der Ausrichtung der ersten Lasche überein. Die Dichtung ist vorzugsweise an der gesamten Oberfläche der ersten Lasche angeordnet. Bei endständiger Anordnung der Lasche greift die Dichtung insbesondere in Falten des Filterkörpers ein, an denen sie befestigt ist. Die Dichtung erfüllt neben der Trennung eines Rohluftraums von einem Reinluftraum auch den Zweck, das Filterelement in dem Filtergehäuse zu fixieren. Der Dichtabschnitt des Seitenbands dient der Abdichtung des Filterelements an offenen Seiten der Falten. Die erste Lasche des ersten Seitenbands bewirkt eine stabilere Anbindung der Dichtung an das Seitenband. Diese stabilere Anbindung kommt einerseits dadurch zustande, dass die Lasche zu einer Vergrößerung der Anbindungsfläche der Dichtung führt. Andererseits wird die Dichtung durch die Lasche mechanisch versteift. Die Lasche unterbindet ein Ablösen der Dichtung, zum Beispiel durch Abschälen. Dies ist insbesondere dann vorteilhaft, wenn die Filterelemente ohne weitere gehäuseseitige Abstützung an ihrer Dichtung verspannt werden, z.B. in Gebäudefiltereinheiten mit typischen Rahmen nach DIN EN 15805, insbesondere zur Aufnahme von Dichtungen der Dicke 25 mm und 20 mm. Die Steifigkeit der Dichtung und die Abzugskräfte zur Schnittstelle am restlichen Filterelement müssen insbesondere dabei derart ausgelegt sein, dass die statischen und/ oder dynamischen Lasten über die Bauteillebensdauer keine signifikante Verformung, Undichtigkeit oder Abschälung der Dichtung vom restlichen Filterelement bewirken.

Bei bevorzugten Ausführungsformen weist der Filterkörper senkrecht zur den Falzkanten der Falten ein Profil auf, das sich aus aneinander angeordneten Einzelbälgen zusammensetzt. Das Filterelement kann mit anderen Worten ein V-Bank-Filter oder W-Bank-Filter sein, vorzugsweise mit mehreren Filterbälgen. Die Einzelbälge sind insbesondere V-förmig oder W-förmig angeordnet. Die Falten des Filterkörpers verlaufen vorzugsweise zick-zack-förmig an den Schenkeln der Profile entlang. Insbesondere können Endfalten an den Enden der Einzelbälge aneinander angeordnet sein, um Anbindungsflächen für die Dichtung bereitzustellen.

Der Filterkörper ist vorzugsweise an dem Seitenband angeklebt.

Der Begriff umlaufend hat hier insbesondere die Bedeutung, dass die Dichtung den Filterkörper umgreift. Die Stirnseiten des Filterelements beziehen sich insbesondere auf die Seiten des Filterelements, die das Filterelement in Richtung der Falzkanten begrenzen. Der Begriff der Falzkanten nimmt insbesondere auf Knickkanten der Falten Bezug und/ oder auf Scheitellinien der Falten, wenn die Falten gebogen ausgestaltet sind. Der Dichtabschnitt ist vorzugsweise als wandförmiges Bauelement ausgebildet.

Der Dichtabschnitt an dem ersten Seitenband erstreckt sich typischerweise in einer Längsrichtung und einer Hochachsenrichtung des Filterkörpers. Die Längsrichtung verläuft in der Regel quer zu der Ausrichtung der Falzkanten. Insbesondere verläuft das Profil des Filterkörpers in der Längsrichtung des Filterkörpers. Senkrecht zu der Ausrichtung der Falzkanten und senkrecht zu der Längsrichtung des Filterkörpers kann die Hochachsenrichtung des Filterkörpers verlaufen. Die Begriffe "oben" und "unten" beziehen sich für die Darstellung der vorliegenden Erfindung insbesondere auf die Hochachsenrichtung.

Bei einer nicht erfindungsgemäßen Ausführungsform des Filterelements ist die erste Lasche endständig an dem Dichtabschnitt angeordnet. Dies vereinfacht die Herstellung des Seitenbandes. Zudem kann bei dieser Ausführungsform insbesondere an einer Außenseite des Dichtabschnitts der Materialverbrauch für die Dichtung verringert werden. Als endständig wird im Rahmen der vorliegenden Erfindung insbesondere eine Position an einer oberen oder unteren Kante des Dichtabschnitts bezeichnet, wobei die obere und untereKante des Dichtabschnitts in der Hochachsenrichtung zueinander beabstandet sind und in der Längsrichtung oder Umfangsrichtung des Filterkörpers verlaufen.

Bei dem Filterelement erstreckt sich der Dichtabschnitt beidseits der ersten Lasche. Die erste Lasche befindet sich in der Hochachsenrichtung zwischen der oberen und unteren Kante des Dichtabschnitts. Bei einer solchen Ausführungsform verläuft die Dichtung auch an der von dem Filterkörper abgewandten Außenfläche des Dichtabschnitts, wodurch die Anbindungsfläche der Dichtung vergrößert wird. Somit ist die Dichtung stabiler ausgebildet. In dieser Ausführung lässt sich die Dichtung vorzugsweise vom, insbesondere oberen, Rand des Filterelementes weg längs der Höhe des Filterelements positionieren, wodurch vorteilhafterweise einerseits eine niedrigere Gesamthöhe realisiert werden kann. Zudem lässt sich für vertikal montierte Filterelemente die Gewichtsverteilung verbessern, so dass die an der Dichtung angreifenden Momente minimiert werden können. Der Begriff "vertikal" bezieht sich insbesondere auf die Richtung der Schwerkraft. Vertikal montierte Filterelemente sind insbesondere derart orientiert, dass sich ihre Anströmfläche in vertikaler Richtung erstreckt. Weiterhin ist hierdurch die Anbindung einer parallel zur Horizontalen verlaufenden Dichtung auch bei Filterelementen möglich, welche eine beliebige von einer Quaderform abweichende Geometrie besitzen, beispielsweise eine Keilform. Besonders bei großen schweren Filterelementen ist diese Ausführungform von Vorteil.

Bei einigen Ausführungsformen des Filterelements ist die erste Lasche einlagig ausgebildet. Das Seitenband weist bei diesen Ausführungsformen insbesondere im Querschnitt ein L-Profil mit zwei voneinander abstehenden Schenkeln auf. Die Lasche kann von dem Dichtabschnitt derart abstehen, dass der Dichtabschnitt und die Lasche im Querschnitt ein L-Profil bilden. Dies betrifft insbesondere Ausführungsformen, bei denen die Lasche und der Dichtabschnitt einstückig ausgebildet sind. Mit einer einlagigen Lasche kann vergleichsweise materialsparend die stärkere Anbindung der Dichtung insbesondere durch die Vergrößerung der Anbindungsfläche bewirkt werden.

Bei alternativen Ausführungsformen des Filterelements ist die erste Lasche mehrlagig, insbesondere doppellagig, ausgebildet. Dadurch weist die Lasche eine besonders hohe Biegesteifigkeit auf. Die beiden Lagen der Lasche sind bevorzugt durch einen gebogenen Abschnitt der Lasche bzw. eine Faltkante miteinander verbunden. Bei einer solchen Ausführungsform ist das Seitenband insbesondere im Querschnitt mit einem T-Profil ausgestaltet. Dieses T-Profil ist bevorzugt aus zwei aneinander anliegenden L-Profilen zusammengesetzt. Ein Schenkel des einen L-Profils liegt an einem Schenkel des anderen L-Profils an. Die Schenkel der L-Profile, die nicht aneinander anliegen, können sich bevorzugt an dem Dichtabschnitt entlang erstrecken, insbesondere in Hochachsenrichtung, bzw. den Dichtabschnitt bilden.

Bei einer Weiterbildung der vorgenannten Ausführungsform sind die zwei Lagen der ersten Lasche miteinander verklebt. Dadurch wird eine Verschiebung der Lagen der Lasche relativ zueinander verhindert, so dass die Stabilität der Lasche weiter erhöht wird.

Bei einer bevorzugten Ausführungsform des Filterelements ist die erste Lasche an den Dichtabschnitt des ersten Seitenbandes angeklebt. Das Ankleben bewirkt auf zeitsparende Weise die Befestigung der Lasche an dem Dichtabschnitt.

Bei vorteilhaften Ausgestaltungen des Filterelements sind die erste Lasche und der Dichtabschnitt des ersten Seitenbandes einstückig miteinander ausgebildet. Dadurch ist die Lasche besonders stabil mit dem Dichtabschnitt verbunden.

Vorteilhaft besteht das erste Seitenband aus einem Vliesmaterial oder Karton. Derartige Fasermaterialien sind in der Herstellung kostengünstig. Darüber hinaus sind sie leicht zu recyceln. Insbesondere Karton zeichnet sich bei relativ geringen Produktionskosten durch eine hohe Biegesteifigkeit aus.

Bevorzugt weist die erste Lasche Durchgangsöffnungen auf, die von der Dichtung durchgriffen werden. Die Dichtung überdeckt einander gegenüberliegende Seitenflächen der Lasche und erstreckt sich durch die Durchgangsöffnungen hindurch. Somit bilden die Lasche und die Dichtung im Bereich der Durchgangsöffnungen einen Formschluss aus, um die Dichtung besonders stabil an der Lasche zu halten.

Bei vorteilhaften Ausführungsformen besteht die Dichtung aus einem geschäumten Material, insbesondere Polyurethanschaum. Durch die Verwendung von Schaum als Material kann die Dichtung in einfacher Weise direkt an der Lasche passend zu der Form der Lasche aufgetragen werden. Polyurethanschaum kann mit verschiedenen Härte- und Dichtegraden hergestellt werden und weist vorteilhafte Eigenschaften für die Verwendung bei Luftfiltern auf.

Bevorzugte Ausführungsformen des Filterelements weisen ein zweites Seitenband mit einer zweiten Lasche auf, wobei das zweite Seitenband den Filterkörper an einer zweiten sich quer zu den Falzkanten erstreckenden Stirnseite abdichtet. Der Filterkörper befindet sich zwischen dem ersten Seitenband und dem zweiten Seitenband. Das zweite Seitenband bewirkt eine Abdichtung des Filterelements, indem es die zweite Stirnseite des Filterkörpers überdeckt. Die zweite Lasche bewirkt eine stärkere Anbindung der Dichtung an das zweite Seitenband und somit an das Filterelement. Das zweite Seitenband ist vorzugsweise wie das erste Seitenband ausgestaltet. Die zweite Lasche ist insbesondere wie die erste Lasche ausgestaltet.

Bei einer Weiterentwicklung der vorgenannten Ausführungsformen sind zwischen dem ersten Seitenband und dem zweiten Seitenband eine dritte und eine vierte Lasche an dem Filterkörper angeordnet, wobei die erste, zweite, dritte und vierte Lasche paarweise aneinander angrenzen und den Filterkörper umgeben. Die dritte und vierte Lasche erstrecken sich jeweils von dem ersten zu dem zweiten Seitenband. Die dritte und die vierte Lasche sind insbesondere nach außen von dem Filterkörper weggerichtet. Durch die vier Laschen wird die Dichtung entlang ihres gesamten Umfangs stärker angebunden und ausgesteift.

Bei weiteren Ausführungsformen ist zumindest an der ersten Lasche ein Versteifungselement angeordnet, wobei das Versteifungselement vorzugsweise als ein umlaufender Kunststoffring ausgebildet ist. Durch das Versteifungselement wird die Biegesteifigkeit der Lasche weiter erhöht. Das Versteifungselement liegt bei einigen Ausführungsformen auf der Lasche auf. Insbesondere ist das Versteifungselement mit der Lasche stoffschlüssig und/oder formschlüssig verbunden, vorzugsweise in die Lasche eingelegt und/oder eingeklebt. Letzteres betrifft vorzugsweise Ausführungsformen, bei denen die Lasche doppellagig ausgestaltet ist. Besonders bevorzugt ist das Versteifungselement an der ersten, zweiten, dritten und vierten Lasche des Filterelements angeordnet.

Eine weitere Ausgestaltung des Filterelements zeichnet sich durch mindestens ein Kopfband, insbesondere mehrere Kopfbänder, an einer Endfläche aus. Die Endfläche bzw. das Kopfband verläuft senkrecht zu dem Dichtabschnitt und an einer seitlichen Kante des Dichtabschnitts entlang. Vorzugsweise bilden die Kopfbänder und die Seitenbänder zusammen ein umlaufendes Gesamtband, welches das Filterelement zur Seite hin vollständig abdichtet.

Der erfindungsgemäße Luftfilter verfügt über ein oben beschriebenes, erfindungsgemäßes Filterelement und ein Filtergehäuse, das einen Filtertopf und einen Filterdeckel aufweist, wobei die Dichtung zwischen dem Filtertopf und dem Filterdeckel geklemmt gehalten ist. Das Filtergehäuse hat in der Regel einen Einlass für verunreinigte Luft und einen Auslass für die durch das Filterelement gereinigte Luft. Die Dichtung dichtet das Filterelement gegenüber dem Filtergehäuse ab, so dass verunreinigte Luft nicht an dem Filterelement vorbei durch das Filtergehäuse strömen kann. Die Dichtung trennt eine Rohseite und eine Reinseite des Luftfilters voneinander.

Die erfindungsgemäße Filteranlage weist ein Filterelement nach einer der vorgenannten Ausführungsformen und einen Strömungskanal auf, der von einem Luftstrom durchströmbar ist, wobei sich das Filterelement senkrecht zu der Richtung des Luftstroms durch den Strömungskanal erstreckt. Das Filterelement unterteilt den Strömungskanal in eine Rohluftseite und eine Reinluftseite. Verunreinigte Luft strömt in einem Luftstrom von der Rohluftseite zu der Reinluftseite durch das Filterelement. Vorzugsweise ist das Filterelement durch Eingriff in einen Profilrahmen, insbesondere kraftschlüssig und/oder formschlüssig, in dem Strömungskanal befestigt. Das Filterelement ist insbesondere durch eine Klemmkraft auf die Dichtung des Filterelements in dem Profilrahmen gehalten. Der Profilrahmen weist vorzugsweise eine Höhe von 16 mm bis 21 mm und eine Tiefe von 20 mm bis 25 mm auf. Bevorzugt ist der Profilrahmen nach der Norm DIN EN 15805 ausgestaltet. Der Strömungskanal kann mit einem Wartungszugang ausgestattet sein. Vorzugsweise wird die Filteranlage in Systemen zur Luftversorgung von Gebäuden verwendet.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können. In der Zeichnung zeigen:
- Fig. 1: einen schematischen Querschnitt durch einen erfindungsgemäßen Luftfilter mit einem erfindungsgemäßen Filterelement;
- Fig. 2: einen schematischen Längsschnitt durch einen Filterkörper eines erfindungsgemäßen Filterelements;
- Fig. 3: eine schematische Perspektivansicht eines nicht erfindungsgemäßen Filterelements;
- Fig. 4: einen Querschnitt durch das nicht erfindungsgemäße Filterelement von Figur 3 in einem schematischen Ausschnitt;
- Fig. 5: einen Längsschnitt durch das nicht erfindungsgemäße Filterelement von Figur 3 in einem schematischen Ausschnitt;
- Fig. 6: einen Querschnitt durch eine weitere Ausführungsform eines erfindungsgemäßen Filterelements in einem schematischen Ausschnitt;
- Fig. 7: einen Längsschnitt durch die weitere Ausführungsform des Filterelements in einem schematischen Ausschnitt;
- Fig. 8: eine schematische Perspektivansicht einer dritten Ausführungsform des Filterelements;
- Fig. 9: schematisch eine Filteranlage mit einem Strömungskanal.

### Ausführungsformen der Erfindung

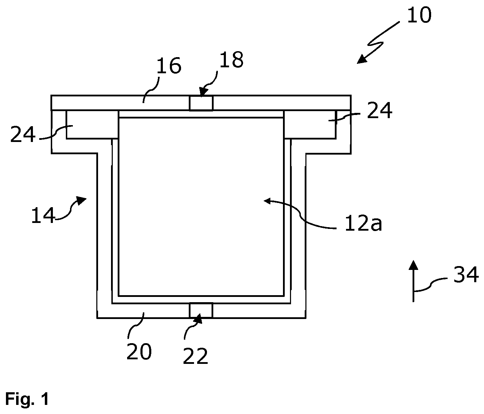

**Figur 1** zeigt schematisch einen Querschnitt durch einen Luftfilter **10** mit einem erfindungsgemäßen Filterelement **12a.** Das Filterelement 12a ist in einem Filtergehäuse **14** gehalten. Das Filtergehäuse 14 weist einen Filterdeckel **16** mit einem Einlass **18** für verunreinigte Luft und einen Filtertopf **20** mit einem Auslass **22** für durch das Filterelement 12a gereinigte Luft auf. Die verunreinigte Luft strömt von dem Einlass 18 durch das Filterelement 12a, wo sie gereinigt wird, und anschließend durch den Auslass 22 aus dem Filtergehäuse 14. Eine umlaufende Dichtung **24** des Filterelements 12a ist zwischen dem Filtertopf 20 und dem Filterdeckel 16 geklemmt gehalten. Die Dichtung 24 verhindert, dass verunreinigte Luft in dem Filtergehäuse 14 an dem Filterelement 12a vorbei strömt. Ferner fixiert die Dichtung 24 das Filterelement 12a in dem Filtergehäuse 14.

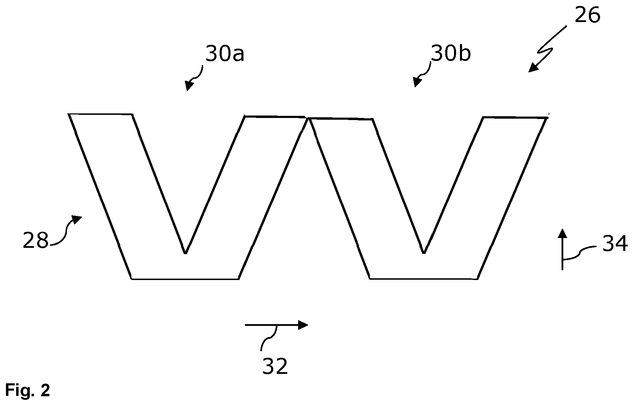

**Figur 2** zeigt einen schematischen Längsschnitt durch einen Filterkörper **26** des Filterelements 12a (siehe Fig. 1). Der Filterkörper 26 hat ein Profil **28,** das sich aus Einzelbälgen **30a, 30b** zusammensetzt, die die gleiche Form haben und in einer Längsrichtung **32** des Filterkörpers 26 aneinander angrenzen. Insbesondere setzt sich das Profil 28 aus sich wiederholenden, aneinander angrenzenden Einzelbälgen 30a, 30b zusammen. Die Einzelbälge 30a, 30b sind in einer Hochachsenrichtung **34,** die senkrecht zu der Längsrichtung 32 steht, nach oben offen ausgebildet. Die Längsrichtung 32 verläuft in Figur 1 senkrecht zur Zeichenebene.

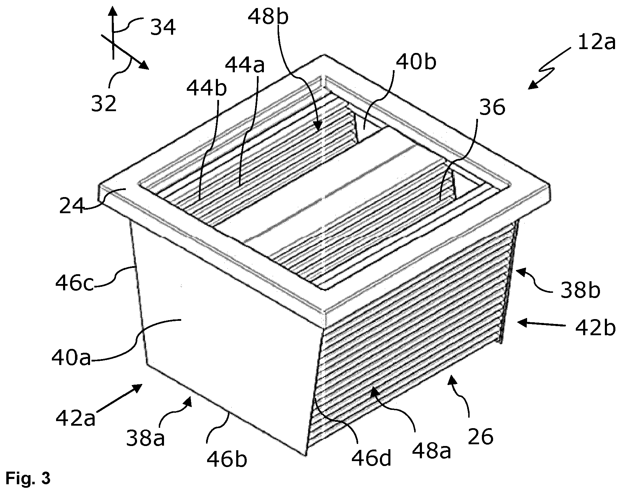

**Figur 3** zeigt eine isometrische Ansicht einer ersten Ausführungsform des Filterelements 12a. Der Filterkörper 26 des Filterelements 12a weist ein gefaltetes Filtermedium **36** zum Reinigen der verunreinigten Luft auf. Ein erstes Seitenband **38a** und ein zweites Seitenband **38b** des Filterelements 12a bestehen aus einem faserhaltigen Material. Das erste Seitenband 38a weist einen ersten Dichtabschnitt **40a** und das zweite Seitenband 38b einen zweiten Dichtabschnitt **40b** zur Abdichtung des Filterkörpers 26 auf, die an sich einander gegenüberliegenden ersten und zweiten Stirnseiten **42a, 42b** quer zu Falzkanten **44a, 44b** des Filtermediums 36 angeordnet sind.

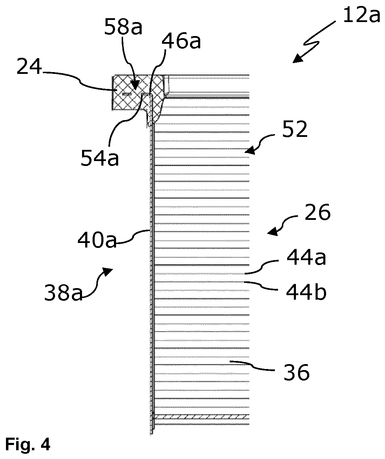

Der Filterkörper 26 verläuft in der Hochachsenrichtung 34, die senkrecht zu der Längsrichtung 32 und senkrecht zu der Ausrichtung der Falzkanten 44a, 44b steht, von einer oberen Kante **46a** (siehe Figur 4) des jeweiligen Dichtabschnitts 40a, 40b zu einer unteren Kante **46b** des betreffenden Dichtabschnitts 40a, 40b. Die obere und die untere Kante 46a, 46b des jeweiligen Dichtabschnitts 40a, 40b erstrecken sich in der Längsrichtung 32. Seitliche Kanten **46c**, **46d** des jeweiligen Dichtabschnitts 40a, 40b verlaufen von der oberen Kante 46a zu der unteren Kante 46b, hier schräg zu der Längsrichtung 32 und der Hochachsenrichtung 34. Die Kanten 46a - 46d sind beispielhaft an dem ersten Dichtabschnitt 40a dargestellt. Senkrecht zu den Dichtabschnitten 40a, 40b und an den seitlichen Kanten 46c, 46d der Dichtabschnitte 40a, 40b entlang verlaufen eine erste und eine zweite Endfläche **48a**, **48b** des Filterkörpers 26, die in der Längsrichtung 32 Außenflächen des Filterelements 12a ausbilden.

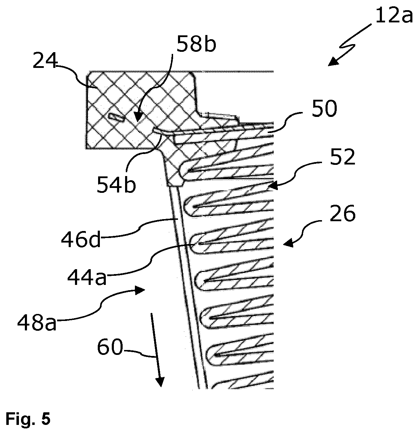

Die Dichtung 24 läuft an den oberen Kanten 46a der Dichtabschnitte 40a, 40b und an Endfalten **50** (siehe Fig. 5) der Endflächen 48a, 48b durchgängig um den Filterkörper 26 herum, um das Filterelement 12a gegen das Filtergehäuse 14 (siehe Figur 1) abzudichten.

In **Figur 4** ist ein Querschnitt durch die erste Ausführungsform des Filterelements **12a** im Bereich des ersten Seitenbands 38a dargestellt. Gezeigt ist unter anderem der Dichtabschnitt 40a des ersten Seitenbandes 38a, an dem Falten **52** des Filterkörpers 26 enden. Der Dichtabschnitt 40a geht in eine endständig, an der oberen Kante 46a des Dichtabschnitts 40a angeordnete erste Lasche **54a** über, die in Richtung der Falzkanten 44a, 44b der Falten 52 von dem Dichtabschnitt 40a absteht. Das erste Seitenband 38a ist hier einstückig ausgebildet; dasselbe Stück faserhaltigen Materials bildet den Dichtabschnitt 40a und die erste Lasche 54a.

Die erste Lasche 54a ist von dem Filterkörper 26 weg gerichtet. Die erste Lasche 54a taucht in die Dichtung 24 ein, so dass die Dichtung 24 die erste Lasche 54a umgreift. In der gezeigten ersten Ausführungsform 12a des Filterelements ist die erste Lasche 54a einlagig ausgestaltet und bildet mit dem Dichtabschnitt 40a im Querschnitt ein L-Profil aus. Eine Durchgangsöffnung **58a** der ersten Lasche 54a wird von der Dichtung 24 durchgriffen, um die Dichtung 24 stabiler an der ersten Lasche 54a zu befestigen. Die Dichtung 24 erstreckt sich von der ersten Lasche 54a zu wenigstens einigen der Falten 52 des Filterkörpers 26, mit denen sie fest verbunden ist und in die sie eingreift. Dadurch bewirkt die Dichtung 24 neben der Abdichtung des Filterelements 12a gegen das Filtergehäuse 14 (siehe Figur 1) eine bessere Befestigung des Filterkörpers 26 an dem ersten Seitenband 38a. Das zweite Seitenband 38b weist eine der ersten Lasche 54a entsprechende, nicht näher dargestellte zweite Lasche auf.

**Figur 5** zeigt einen Längsschnitt durch die erste Ausführungsform des Filterelements 12a im Bereich der ersten Endfläche 48a . Die Falten 52 des Filterkörpers 26 sind in einer Faltrichtung 60, die parallel zu der seitlichen Kante 46d des ersten Dichtabschnitts 40a (siehe Figur 3) gerichtet ist, an den Schenkeln der V-Profile (siehe Figur 2) aufeinander folgend gefaltet. An einer Endfalte 50 des Filterkörpers 26 ist eine dritte Lasche 54b befestigt, insbesondere angeklebt, wobei die dritte Lasche 54b von der Dichtung 24 umhüllt ist. Die dritte Lasche 54b weist ebenfalls eine Durchgangsöffnung **58b** auf, die von der Dichtung 24 durchgriffen wird, um die Dichtung 24 besser an der dritten Lasche 54b zu befestigen. Dabei steht die dritte Lasche 54b schräg zu der Faltrichtung 60 der Falten 52 des Filterkörpers 26. An der zweiten Endfläche 48b ist eine der dritten Lasche 54b entsprechende, nicht näher dargestellte vierte Lasche angeordnet.

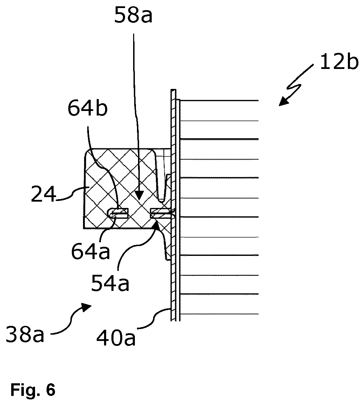

**Figur 6** zeigt einen Querschnitt durch eine zweite Ausführungsform des Filterelements 12b im Bereich des ersten Dichtabschnitt 40a. Im Unterschied zu der ersten Ausführungsform 12a des Filterelements (siehe Figur 4) ist die erste Lasche 54a hier doppellagig ausgebildet, ebenso wie eine nicht gezeigte zweite Lasche an dem zweiten Dichtabschnitt 40b. Das erste Seitenband 38a bzw. die erste Lasche 54a zusammen mit dem ersten Dichtabschnitt 40a weisen im Querschnitt ein T-Profil auf. Der erste Dichtabschnitt 40a erstreckt sich beidseits der ersten Lasche 54a, wobei der erste Dichtabschnitt 40a mit jeweils einer der Lagen **64a**, **64b** der doppellagigen ersten Lasche 54a im Querschnitt ein L-Profil ausbildet. Die beiden Lagen 64a, 64b der ersten Lasche 54a gehen durch einen gebogenen Abschnitt der ersten Lasche 54a ineinander über. Die Dichtung 24 umhüllt beide Lagen 64a, 64b der ersten Lasche 54a und durchgreift eine Durchgangsöffnung 58a, die sich durch beide Lagen 64a, 64b erstreckt.

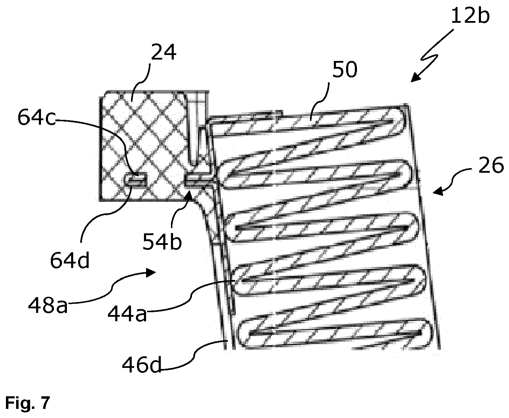

**Figur 7** zeigt einen Längsschnitt durch die zweite Ausführungsform des Filterelements 12b im Bereich der ersten Endfläche 48a. Im Unterschied zu der ersten Ausführungsform 12a des Filterelements ist hier auch die dritte Lasche 54b doppellagig ausgebildet, ebenso wie eine nicht gezeigte vierte Lasche an der zweiten Endfläche 48b. Die beiden Lagen **64c**, **64d** der dritten Lasche 54b bilden im Querschnitt jeweils einen Schenkel eines L-Profils. Die aneinander anliegenden, durch einen gebogenen Abschnitt der Lasche 54b verbundenen Lagen 64c, 64d sind derart winkelig zu der ersten Endfläche 48a ausgerichtet, die parallel zu der seitlichen Kante 46d des Dichtabschnitts 40a (siehe Fig. 3) verläuft, dass sie parallel zu der Längsrichtung 32 (siehe Figur 3) des Filterkörpers 26 orientiert sind. Die dritte Lasche 54b ist an der anliegenden Endfalte 50 des Filterkörpers 26 befestigt, insbesondere angeklebt, und kann sich an Falzkanten 44a der ersten Endfläche 48a abstützen.

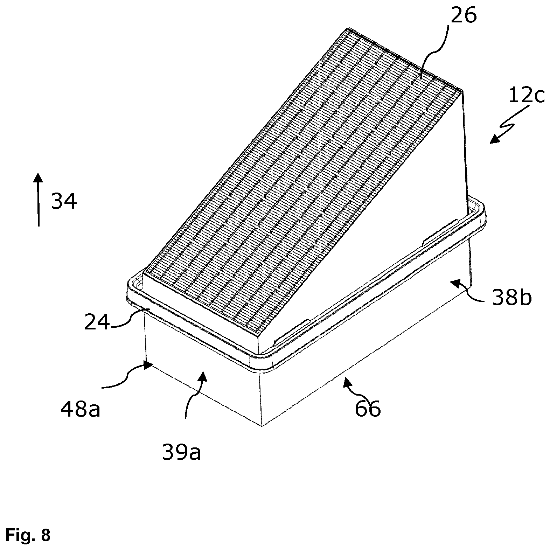

**Figur 8** zeigt eine schematische Perspektivansicht einer dritten Ausführungsform des Filterelements **12c**, welches außer den Seitenbändern 38a, 38b (siehe Figur 3), von denen in der Figur beispielhaft das Seitenband 38b zu erkennen ist, Kopfbänder an den Endflächen 48a, 48b (siehe Figur 3) aufweist, von denen in der Figur 8 beispielhaft ein Kopfband 39a zu erkennen ist. Die Kopfbänder dienen insbesondere der Abdichtung der Endflächen 48a, 48b. Die Kopfbänder und die Seitenbänder 38a, 38b bilden zusammen ein umlaufendes Gesamtband 66, welches mit der Dichtung 24 das Filterelement 12a zur Seite hin abdichtet. Die Kopfbänder und/oder die Seitenbänder 38a, 38b weisen insbesondere Karton als Material auf. Der Filterkörper 26 ragt in Hochachsenrichtung 34 mit einer zu der Hochachsenrichtung 34 geneigten Oberfläche über die Dichtung 24 hinaus. Der Filterkörper 26 kann unterschiedlich hohe Falten aufweisen, so dass eine Höhe des Filterelements 12c beispielsweise von der Endfläche 48a zu der Endfläche 48b hin zunimmt. Die Laschen zur Anbindung der Dichtung können hierbei vorteilhaft durch Faltung des jeweiligen Seitenbands 38a, 38b bzw. Kopfbands 39a, 39b gebildet und somit doppellagig sein. Alternativ ist eine zweiteilige Ausbildung der Seitenbänder und/oder Kopfbänder möglich, d.h. zwei Dichtabschnitte werden überlappend auf die jeweils abzudeckende Seitenfläche des Filterkörpers aufgebracht, und am über dem anderen liegenden Dichtabschnitt wird die Lasche durch Umbiegen des freien Endabschnitts ausgebildet. Hierdurch wäre die Ausbildung einer einlagigen Lasche auch beabstandet von Anström- bzw. Abströmseite möglich. Die Dichtung ist vorzugsweise an die Lasche angeschäumt.

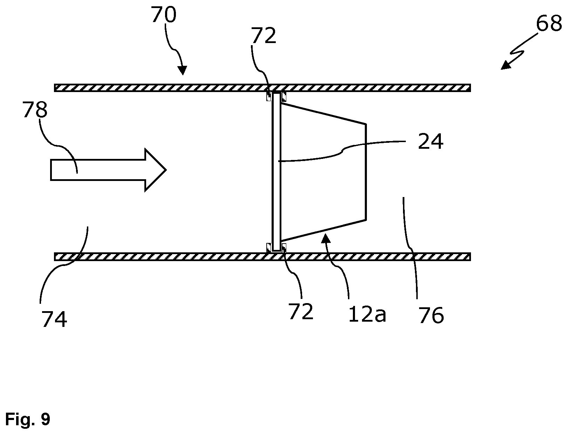

**Figur 9** zeigt schematisch eine Filteranlage **68** mit einem Strömungskanal **70,** in dem ein Filterelement, hier beispielhaft in der ersten Ausführungsform 12a, durch einen Profilrahmen **72** gehalten ist. Das Filterelement 12a erstreckt sich durch den Querschnitt des Strömungskanals 70. Dadurch unterteilt das Filterelement 12a den Strömungskanal 70 in eine Rohluftseite **74** und eine Reinluftseite **76.** Verunreinigte Luft strömt in einem Luftstrom **78** von der Rohluftseite 74 zu der Reinluftseite 76 durch das Filterelement 12a hindurch. Das Filterelement 12a ist insbesondere kraftschlüssig und/oder formschlüssig, zum Beispiel durch eine Klemmkraft auf die Dichtung 24, in dem Profilrahmen 72 gehalten. Der Strömungskanal 70 kann mit einem nicht gezeigten Wartungszugang ausgestattet sein.

### Bezugszeichenliste

- 10: Luftfilter
- 12a,12 b: Filterelement
- 14: Filtergehäuse
- 16: Filterdeckel
- 18: Einlass
- 20: Filtertopf
- 22: Auslass
- 24: Dichtung
- 26: Filterkörper
- 28: Profil des Filterkörpers
- 30a, b: Einzelbälge
- 32: Längsrichtung
- 34: Hochachsenrichtung
- 36: Filtermedium
- 38a,b: Seitenband
- 39a: Kopfband
- 40a, b: Dichtabschnitte
- 42a, b: Stirnseiten
- 44a, b: Falzkanten
- 46a, b: obere, untere Kante des Dichtabschnitts
- 46c, d: seitliche Kanten des Dichtabschnitts
- 48a, b: Endflächen
- 50: Endfalte
- 52: Falten
- 54a: erste Lasche
- 54b: dritte Lasche
- 58a, b: Durchgangsöffnungen
- 60: Faltrichtung
- 64a-d: Lagen der Laschen
- 66: Gesamtband
- 68: Filteranlage
- 70: Strömungskanal
- 72: Profilrahmen
- 74: Rohluftseite
- 76: Reinluftseite
- 78: Luftstrom

## Patentansprüche

1. Filterelement (12a, 12b, 12c) zum Filtern von Luft, aufweisend:
a) einen Filterkörper (26), aufweisend ein gefaltetes Filtermedium (36);
b) ein erstes Seitenband (38a) aus einem faserhaltigen Material,
mit einem Dichtabschnitt (40a), der den Filterkörper (26) an einer sich quer zu Falzkanten (44a, 44b) des Filtermediums (36) erstreckenden ersten Stirnseite (42a) abdichtet,
und mit einer von dem Dichtabschnitt (40a) abstehenden ersten Lasche (54a), die sich vorzugsweise in Richtung der Falzkanten (44a) erstreckt;
c) eine umlaufende Dichtung (24), welche die erste Lasche (54a) umgreift, und
wobei sich der Dichtabschnitt (40a) beidseits der ersten Lasche (54a) erstreckt.

2. Filterelement nach einem der vorhergehenden Ansprüche, wobei die erste Lasche (54a) einlagig ausgebildet ist.

3. Filterelement nach einem der vorhergehenden Ansprüche, wobei die erste Lasche (54a) mehrlagig, insbesondere doppellagig, ausgebildet ist.

4. Filterelement nach Anspruch 3, wobei zwei Lagen (64a, 64b) der ersten Lasche (54a) miteinander verklebt sind.

5. Filterelement nach einem der Ansprüche 1 bis 4, wobei die erste Lasche (54a) an den Dichtabschnitt (40a) des ersten Seitenbandes (38a) angeklebt ist.

6. Filterelement nach einem der Ansprüche 1 bis 4, **dadurch gekennzeichnet, dass** die erste Lasche (54a) und der Dichtabschnitt (40a) des ersten Seitenbandes (38a) einstückig miteinander ausgebildet sind.

7. Filterelement nach einem der vorhergehenden Ansprüche, wobei das erste Seitenband (38a) aus einem Vliesmaterial oder Karton besteht.

8. Filterelement nach einem der vorhergehenden Ansprüche, wobei die erste Lasche (54a) Durchgangsöffnungen (58a) aufweist, die von der Dichtung (24) durchgriffen werden.

9. Filterelement nach einem der vorhergehenden Ansprüche, wobei die Dichtung (24) aus einem geschäumten Material, insbesondere Polyurethanschaum, besteht.

10. Filterelement nach einem der vorhergehenden Ansprüche mit einem zweiten Seitenband (38b) mit einer zweiten Lasche, wobei das zweite Seitenband (38b) den Filterkörper (26) an einer zweiten sich quer zu den Falzkanten (44a, 44b) erstreckenden Stirnseite (42b) abdichtet.

11. Filterelement nach Anspruch 10, wobei zwischen dem ersten Seitenband (38a) und dem zweiten Seitenband (38b) eine dritte und eine vierte Lasche (54b) an dem Filterkörper (26) angeordnet sind, wobei die erste, zweite, dritte und vierte Lasche (54a, 54b) paarweise aneinander angrenzen und den Filterkörper (26) umgeben.

12. Filterelement nach einem der vorhergehenden Ansprüche, wobei zumindest an der ersten Lasche (54a) ein Versteifungselement angeordnet ist, wobei das Versteifungselement vorzugsweise als ein umlaufender Kunststoffring ausgebildet ist.

13. Filterelement nach einem der vorhergehenden Ansprüche, aufweisend mindestens ein Kopfband (39a) an einer Endfläche (48a, 48b), die senkrecht zu dem Dichtabschnitt (40a, 40b) und an einer seitlichen Kante (46c, 46d) des Dichtabschnitts (40a, 40b) entlang verläuft.

14. Luftfilter (10) mit einem Filterelement (12a, 12b, 12c) nach einem der vorhergehenden Ansprüche und mit einem Filtergehäuse (14), das einen Filtertopf (20) und einen Filterdeckel (16) aufweist, wobei die Dichtung (24) zwischen dem Filtertopf (20) und dem Filterdeckel (16) geklemmt gehalten ist.

15. Filteranlage (68) mit einem Filterelement (12a, 12b, 12c) nach einem der Ansprüche 1 bis 13 und einem Strömungskanal (70), der von einem Luftstrom (78) durchströmbar ist, wobei sich das Filterelement (12a, 12b, 12c) senkrecht zu der Richtung des Luftstroms (78) durch den Strömungskanal (72) erstreckt und vorzugsweise durch Eingriff in einen Profilrahmen (72) in dem Strömungskanal (70) gehalten ist.

## Claims

1. A filter element (12a, 12b, 12c) for filtering air, comprising:
a) a filter body (26) comprising a pleated filter medium (36);
b) a first sideband (38a) made of a fiber-containing material,
with a sealing section (40a) sealing the filter body (26) at a first front face (42a) extending transversely to fold edges (44a, 44b) of the filter medium (36),
and with a first tab (54a) projecting from the sealing section (40a) and preferably extending in the direction of the fold edges (44a);
c) a circumferential seal (24) surrounding the first tab (54a), and wherein the sealing section (40a) extends on both sides of the first tab (54a).

2. The filter element according to one of the preceding claims, wherein the first tab (54a) is formed in a single layer.

3. The filter element according to one of the preceding claims, wherein the first tab (54a) is formed in multiple layers, in particular double layers.

4. The filter element according to claim 3, wherein two layers (64a, 64b) of the first tab (54a) are bonded together.

5. The filter element according to one of the claims 1 to 4, wherein the first tab (54a) is glued to the sealing section (40a) of the first sideband (38a).

6. The filter element according to one of the claims 1 to 4, **characterized in that** the first tab (54a) and the sealing section (40a) of the first sideband (38a) are formed integrally with one another.

7. The filter element according to one of the preceding claims, wherein the first sideband (38a) consists of a non-woven fabric or cardboard.

8. The filter element according to one of the preceding claims, wherein the first tab (54a) has through-openings (58a) through which the seal (24) passes.

9. The filter element according to one of the preceding claims, wherein the seal (24) consists of a foamed material, in particular polyurethane foam.

10. The filter element according to one of the preceding claims, with a second sideband (38b) having a second tab, wherein the second sideband (38b) seals the filter body (26) at a second front face (42b) extending transversely to the fold edges (44a, 44b).

11. The filter element according to claim 10, wherein a third and a fourth tab (54b) are disposed on the filter body (26) between the first sideband (38a) and the second sideband (38b), wherein the first, second, third and fourth tabs (54a, 54b) are adjacent to each other in pairs and surround the filter body (26).

12. The filter element according to one of the preceding claims, wherein a stiffening element is arranged at least on the first tab (54a), wherein the stiffening element is preferably designed as a circumferential plastic ring.

13. The filter element according to one of the preceding claims, featuring at least one headband (39a) on an end surface (48a, 48b) perpendicular to the sealing section (40a, 40b) and on a lateral edge (46c, 46d) of the sealing section (40a, 40b).

14. An air filter (10) with a filter element (12a, 12b, 12c) according to one of the preceding claims and with a filter housing (14) featuring a filter bowl (20) and a filter cover (16), wherein the seal (24) is clamped between the filter bowl (20) and the filter cover (16).

15. A filter system (68) with a filter element (12a, 12b, 12c) according to one of the claims 1 to 13 and a flow channel (70) through-flowable by an airflow (78), wherein the filter element (12a, 12b, 12c) extends perpendicular to the direction of the airflow (78) through the flow channel (72) and is preferably held in the flow channel (70) by engagement in a profile frame (72).

## Revendications

1. Élément filtrant (12a, 12b, 12c) destiné à filtrer l'air, présentant:
a) un corps de filtre (26) comprenant un milieu filtrant plié (36);
b) une première bande latérale (38a) constituée d'un matériau fibreux,
avec une section d'étanchéité (40a) assurant l'étanchéité du corps de filtre (26) au niveau d'une première face frontale (42a) s'étendant transversalement aux bords pliés (44a, 44b) du milieu filtrant (36),
et avec une première languette (54a) saillante de la section d'étanchéité (40a) et s'étendant de préférence dans la direction des bords pliés (44a);
c) un joint d'étanchéité périphérique (24) entourant la première languette (54a), et la section d'étanchéité (40a) s'étendant des deux côtés de la première languette (54a).

2. Élément filtrant selon l'une quelconque des revendications précédentes, la première languette (54a) étant constituée d'une seule couche.

3. Élément filtrant selon l'une quelconque des revendications précédentes, la première languette (54a) étant constituée de plusieurs couches, en particulier de deux couches.

4. Élément filtrant selon la revendication 3, deux couches (64a, 64b) de la première languette (54a) étant collées l'une à l'autre.

5. Élément filtrant selon l'une quelconque des revendications 1 à 4, la première languette (54a) étant collée à la section d'étanchéité (40a) de la première bande latérale (38a).

6. Élément filtrant selon l'une quelconque des revendications 1 à 4, **caractérisé en ce que** la première languette (54a) et la section d'étanchéité (40a) de la première bande latérale (38a) sont formées d'un seul tenant.

7. Élément filtrant selon l'une quelconque des revendications précédentes, la première bande latérale (38a) étant constituée d'un matériau non tissé ou de carton.

8. Élément filtrant selon l'une quelconque des revendications précédentes, la première languette (54a) présentant des ouvertures de passage (58a) traversées par le joint d'étanchéité (24).

9. Élément filtrant selon l'une quelconque des revendications précédentes, le joint d'étanchéité (24) étant constitué d'un matériau expansé, en particulier de mousse polyuréthane.

10. Élément filtrant selon l'une quelconque des revendications précédentes, avec une deuxième bande latérale (38b) ayant une deuxième languette, la deuxième bande latérale (38b) assurant l'étanchéité du corps de filtre (26) au niveau d'une deuxième face frontale (42b) s'étendant transversalement aux bords pliés (44a, 44b).

11. Élément filtrant selon la revendication 10, une troisième et une quatrième languettes (54b) étant disposées sur le corps de filtre (26) entre la première bande latérale (38a) et la deuxième bande latérale (38b), les première, deuxième, troisième et quatrième languettes (54a, 54b) étant adjacentes par paires et entourent le corps de filtre (26).

12. Élément filtrant selon l'une quelconque des revendications précédentes, un élément de renfort étant disposé au moins sur la première languette (54a), l'élément de renfort étant de préférence conçu comme un anneau en plastique périphérique.

13. Élément filtrant selon l'une quelconque des revendications précédentes, présentant au moins une bande frontale (39a) sur une surface d'extrémité (48a, 48b) perpendiculaire à la partie d'étanchéité (40a, 40b) et sur un bord latéral (46c, 46d) de la section d'étanchéité (40a, 40b).

14. Filtre à air (10) avec un élément filtrant (12a, 12b, 12c) selon l'une quelconque des revendications précédentes et avec un boîtier de filtre (14) présentant une cuve de filtration (20) et un couvercle de filtre (16), le joint d'étanchéité (24) étant maintenu serré entre la cuve de filtration (20) et le couvercle de filtre (16).

15. Système de filtration (68) avec un élément filtrant (12a, 12b, 12c) selon l'une quelconque des revendications 1 à 13 et un canal d'écoulement (70) pouvant être traversé par un flux d'air (78), l'élément filtrant (12a, 12b, 12c) s'étendant perpendiculairement à la direction du flux d'air (78) à travers le canal d'écoulement (72) et étant de préférence maintenu dans le canal d'écoulement (70) par engagement dans un cadre profilé (72).
